# EUROPEAN PATENT APPLICATION

(11) **EP 4 186 999 A1**
(43) Date of publication of application: **31.05.2023**
(21) Application number: 21847175.3
(22) Date of filing: 24.02.2021
(51) Int. Cl.: C25D 3/64, C25D 5/12, C25D 7/00

(54) **TERMINAL MATERIAL FOR CONNECTORS**

(30) Priority: 22.07.2020 JP 2020125673; 02.02.2021 JP 2021015188
(71) Applicant: Mitsubishi Materials Corporation, Tokyo 100-8117 (JP)
(72) Inventor: TARUTANI, Yoshie, Naka-shi, Ibaraki 311-0102 (JP); KATOU, Naoki, Tokyo 100-8117 (JP); KUBOTA, Kenji, Naka-shi, Ibaraki 311-0102 (JP)
(74) Representative: Gille Hrabal Partnerschaftsgesellschaft mbB Patentanwälte
(86) International application number: PCT/JP2021/006759
(87) International publication number: WO 2022/018896

(57) **Abstract**

A base material at least a surface is made of copper or copper alloy and a silver-nickel-potassium alloy plating layer formed on at least a part of the base material are provided; the silver-nickel-potassium alloy plating layer has a film thickness of 0.5 µm or more and 20.0 µm or less, a nickel content of 0.02% by mass or more and 0.60% by mass or less, and a potassium content of 0.03% by mass or more and 1.00% by mass or less; and an average crystal grain size of the silver-nickel-potassium alloy plating layer is preferably 10 nm or more and 150 nm or less.

## Description

### BACKGROUND OF THE INVENTION

### Technical Field

The present invention relates to a terminal material for a connector in which a useful film is formed that is used for connecting electrical wirings of vehicles and consumer products in which large current and high voltage are applied. Priority is claimed on Japanese Patent Applications No. 2020-125673 filed July 22, 2020, and No. 2021-15188 filed February 2, 2021, the content of which is incorporated herein by reference.

### Background Art

An on-vehicle connecter used for connecting electrical wiring for vehicle and the like is known conventionally. The on-vehicle connectors (on-vehicle terminals) are provided with a terminal pair designed for electrically connecting, by contacting a contact segment provided in a female terminal and a male terminal inserted in the female terminal with a predetermined contact pressure.

As such connecters (terminals), terminals with tin plating in which tin plating is formed on a copper or copper alloy plate and reflow treatment is performed are generally used frequently. However, in recent years, purposes of terminals which are excellent in heat resistance and wear resistance by noble-metal plating of silver and the like to flow larger current are increased in accordance with larger current and higher voltage in vehicles.

As on-vehicle terminals in which the heat resistance and the wear resistance are required, for example, the silver-plating terminal for a connector described in Patent Literature 1 is known. In the silver-plating terminal for a connector described in Patent Literature 1, a surface of a base material made of copper or copper alloy is covered with a silver-plating layer.

The silver-plating layer has a first silver-plating layer positioned at a lower layer side (base material side) and a second silver-plating layer positioned at an upper layer side of the first silver-plating layer; a crystal grain size in the first silver-plating layer is formed to be larger than a crystal grain size in the second silver-plating layer. That is, in a structure of Patent Literature 1, copper is prevented from diffusing from the base material to the second silver-plating layer by forming the crystal grain size in the first silver-plating layer larger than the crystal grain size in the second silver-plating layer.

In Patent Literature 2, a copper or copper alloy member in which a silver or silver alloy layer in which antimony concentration is 0.1% by mass or less is formed on at least a part of a surface of a copper or copper alloy member as a base material and a silver-alloy layer with 0.5% by mass or more of antimony concentration and 140 HV or more of Vickers hardness is formed as an outermost layer on the silver or silver alloy layer is disclosed. That is, in a structure of Patent Literature 2, hardness is increased by adding antimony in the silver or silver alloy layer to increase wear resistance of the copper or copper alloy member.

### Citation List

Patent Literature 1: Japanese Unexamined Patent Application, First Publication No. 2008-169408
Patent Literature 2: Japanese Unexamined Patent Application, First Publication No. 2009-79250

### SUMMARY OF INVENTION

### Technical Problem

In the structure of Patent Literature 1, since the crystal grain size of silver becomes large (coarsened) by the change with time and the usage in the high temperature environment and the hardness decreases, the wear resistance of the silver-plating layer covering the surface of the base material is deteriorated under the usage for a long time under the high temperature environment. In order to compensate the decrease of the wear resistance, a film thickness of the silver-plating layer may be thick; however, the cost may be a matter. In the structure of Patent Literature 2, there is a problem in that antimony is diffused to the outermost surface of the plating layer by heating, concentrated, and oxidized to increase the contact resistance.

The present invention is achieved in consideration of the above circumstances, and has an object to provide a terminal material for a connector enabling to improve the wear resistance and the heat resistance.

### Solution to Problem

A terminal material for a connector according to the present invention has a base material at least a surface is made of copper or copper alloy, and a silver-nickel-potassium alloy plating layer formed on at least a part of the base material, in which the silver-nickel-potassium alloy plating layer has a film thickness of 0.5 µm or more and 20.0 µm or less, a nickel content of 0.02% by mass or more and 0.60% by mass or less, and a potassium content of 0.03% by mass or more and 1.00% by mass or less.

In the present invention, the silver-nickel-potassium alloy plating layer formed on the surface of the base material has eutectoids of silver with nickel and potassium, so that crystal grains in the silver-nickel-potassium alloy plating layer can be minute. Moreover, by the eutectoid of nickel and potassium, the hardness is increased and the wear resistance is improved. Furthermore, since nickel and potassium are not easily thermally diffused, it is possible to suppress coarsening of the crystal grain of in the silver-nickel-potassium alloy plating layer in the high temperature environment.

In this case, if the nickel content is less than 0.02% by mass or the potassium content is less than 0.03% by mass, the average crystal grain size in the silver-nickel-potassium alloy plating layer is large, so that the friction coefficient increases associated with the coarsening of the crystal grain. If the nickel content exceeds 0.60% by mass or the potassium content exceeds 1.00% by mass, a deposition state of the silver-nickel-potassium alloy plating layer is deteriorated to lose smoothness and the friction coefficient increases. Moreover, in this case, since the electrical conductivity of nickel and potassium itself is low, the electrical conductivity decreases when the eutectoid amount of nickel and potassium increases and the contact resistance increases. Furthermore, the contact resistance further increases in the high temperature environment.

If the film thickness of the silver-nickel-potassium alloy plating layer is less than 0.5 µm, the heat resistance and the wear resistance are not increased; if it exceeds 20.0 µm, the silver-nickel-potassium alloy plating layer is too thick to occur cracks by bending work and the like.

In the terminal material for a connector, an average crystal grain size of the silver-nickel-potassium alloy plating layer is preferably 10 nm or more and 150 nm or less.

In this case, since the silver-nickel-potassium alloy plating layer contains nickel and potassium, the coarsening of the crystal grain is suppressed even when exposed in the high temperature environment and deterioration of the wear resistance in the high temperature environment is also small. When the silver-nickel-potassium alloy plating layer is formed, there is a case in which the average crystal grain size of the silver-nickel-potassium alloy plating layer exceeds 150 nm if nickel and potassium do not make eutectoids or a eutectic amount is low. In this case, since the eutectic amount of nickel and potassium is small and the plating layer has a characteristic resembling pure silver, there is a risk that the crystal grain may be coarsened in the high temperature environment and the wear resistance may be deteriorated. Although it is better that the average crystal grain size is smaller, it is not realistic when the crystal grain size smaller than 10 nm is measured since reliability of a measurement result is low.

As another aspect of the terminal material for a connector, a silver-plating layer having a purity of silver 99.0% by mass or more excepting C, H, S, O, and N which are gas components with a film thickness of 0.1 µm or more and 5.0 µm or less on at least a part of the silver-nickel-potassium alloy plating layer may be provided.

Since the relatively soft silver-plating layer is formed on a surface, the lubricant effect thereof improves the wear resistance. If the film thickness is less than 0.1 µm, the silver-plating layer is too thin, so that the effect of improving the wear resistant is poor and the layer is easily lost in a short time by wearing. If the thickness exceeds 5.0 µm, the soft silver-plating layer is thick and the friction coefficient tends to increase.

As further another aspect of the terminal material of a connector, a nickel-plating layer made of nickel or nickel alloy with a film thickness of 0.2 µm or more and 5.0 µm or less is preferably formed between the base material and the silver-nickel-potassium alloy plating layer.

The nickel-plating layer prevents copper from diffusing into the silver-nickel-potassium alloy plating layer from the base material. If the film thickness of the nickel-plating layer is less than 0.2 µm, there is a risk that copper diffuses into the silver-nickel-potassium alloy plating layer from the base material in the high temperature environment. If copper which is diffused into the silver-nickel-potassium alloy plating layer diffuses to the surface of the plating film, copper is oxidized and the contact resistance increased, and there is a possibility of the heat resistance to be deteriorated. On the other, the film thickness of the nickel-plating layer exceeds 5.0 µm, there is a possibility of occurring of cracks by the bending works or the like.

### Advantageous Effects of Invention

According to the present invention, it is possible to improve the wear resistance and the heat resistance of a terminal material for a connector.

### BRIEF DESCRIPTION OF DRAWINGS

[FIG. 1] It is a cross-sectional view schematically showing a terminal material for a connector according to a first embodiment of the present invention.
[FIG. 2] It is a cross-sectional view schematically showing a terminal material for a connector according to a second embodiment of the present invention.
[FIG. 3] It is a cross-sectional view schematically showing a terminal material for a connector according to a third embodiment of the present invention.
[FIG. 4] It is a cross-sectional view schematically showing a terminal material for a connector according to a fourth embodiment of the present invention.
[FIG. 5] It is an image of SIM (Scanning Ion Microscope) of a cross section of a terminal material for a connector before heating in Example 5.

### DESCRIPTION OF EMBODIMENTS

Embodiments of the present invention will be described below using drawings.

### [First Embodiment]

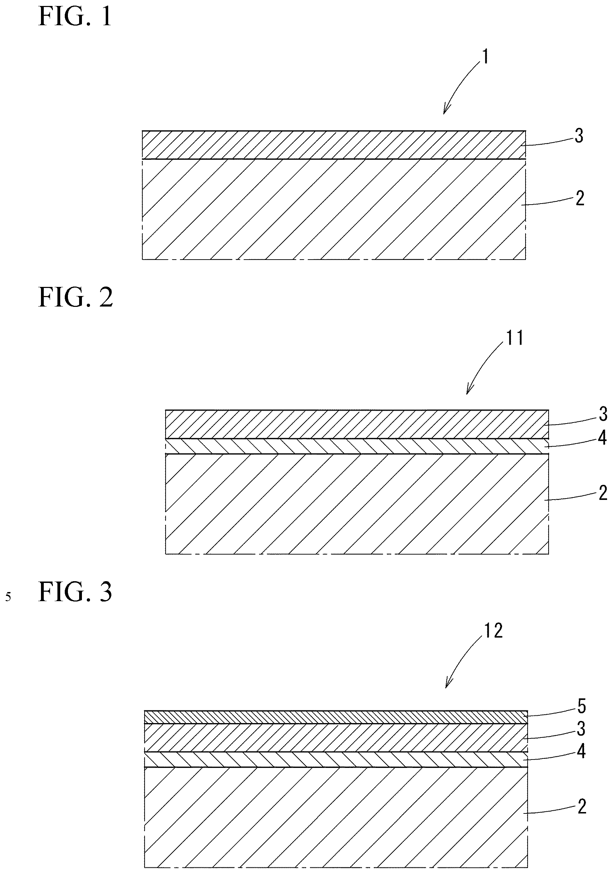

As a cross section is schematically shown in FIG. 1, a terminal material 1 for a connector of a first embodiment has a base material 2 with a plate shape at least a surface is made of copper or copper alloy and a silver-nickel-potassium alloy plating layer 3 formed on the base material 2.

The base material 2 is not specifically limited in the composition if the surface is made of copper or copper alloy. In the present embodiment, as shown in FIG. 1, the base material 2 is configured from a plate material made of copper or copper alloy such as oxygen-free copper (C10200) and Cu-Mg type copper alloy (C18665); however, it may be configured from a plated material in which a surface of a base material which is not copper or copper alloy is subjected to copper plating or copper-alloy plating. In this case, a metal plate other than copper can be applied as the base material.

The silver-nickel-potassium alloy plating layer 3 is formed by performing a silver-strike plating treatment on the base material 2 as described below and then performing a silver-nickel-potassium alloy plating treatment. The silver-nickel-potassium alloy plating layer 3 is formed by making eutectoids of nickel and potassium with silver in a mother phase.

The silver-nickel-potassium alloy plating layer has the eutectoids of nickel and potassium with silver, so that the crystal grain in the silver-nickel-potassium alloy plating layer can be minute. Moreover, by the eutectoids of nickel and potassium, the hardness is increased and the wear resistance is improved. Furthermore, since nickel and potassium are not easily diffused, the coarsening of the crystal grain in the silver-nickel-potassium alloy plating layer in the high temperature environment can be suppressed.

A nickel content in the silver-nickel-potassium alloy plating layer 3 is 0.02% by mass or more and 0.60% by mass or less; a potassium content is 0.03% by mass or more and 1.00% by mass or less. Since nickel and potassium are contained in the range, the contact resistance is not increased, the hardness at the surface is increased, and the wear resistance is improved.

If the nickel content is less than 0.02% by mass or the potassium content is less than 0.03% by mass, the average crystal grain size is large in the silver-nickel-potassium alloy plating layer 3, causing increase of the friction coefficient with the coarsening of crystal grain.

If the nickel content exceeds 0.60% by mass or the potassium content exceeds 1.00% by mass, the deposition state of the silver-nickel-potassium alloy plating layer 3 is deteriorated to lose smoothness and the friction coefficient increases. Moreover, in this case, since the electrical conductivity of nickel and potassium itself is low, the electrical conductivity decreases when the eutectoid amount of nickel and potassium increases, and the contact resistance increases. Moreover, impurities, nickel and potassium in plating solution involved in the silver-nickel-potassium alloy plating layer 3 in the plating treatment stated below are oxidized in the high temperature environment, so that the contact resistance further increases. Moreover, since the electric conductivity of nickel and potassium is lower than that of silver, if the nickel content exceeds 0.60% by mass or the potassium content exceeds 1.00% by mass, the contact resistance of the silver-nickel-potassium alloy plating layer 3 increases.

In addition, nickel and potassium is not easily thermally diffused in the mother phase, it is difficult to be concentrated on the outermost surface even in the high temperature environment. Accordingly, it is possible to suppress the increase of the contact resistance in the high temperature environment, maintain the crystal grain size to be small, maintain the friction coefficient to be low, and maintain the wear resistance.

The range of the nickel content is preferably 0.56% by mass or less, more preferably 0.30% by mass or less; the range of the potassium content is preferably 0.60% by mass or less.

The average crystal grain size of the silver-nickel-potassium alloy plating layer 3 is minute as 10 nm or more and 150 nm or less; since nickel and potassium are contained, the coarsening of the crystal grain is suppressed even exposed in the high temperature environment, and the deterioration of the wear resistance in the high temperature environment is also small. In cases of nickel and potassium do not make eutectoid or the eutectoid amount is low when the silver-nickel-potassium alloy plating layer 3 is formed, the average crystal grain size of the silver-nickel-potassium alloy plating layer 3 may exceed 150 nm. In this case, the eutectoid amount of nickel and potassium is small and the characteristic of the plating layer resembles pure silver, so that the crystal grain is coarsened in the high temperature environment and the wear resistance may be deteriorated. Although it is better that the average crystal grain size is smaller, it is not realistic when the crystal grain size smaller than 10 nm is measured since reliability of a measurement result is low. The average crystal grain size of the silver-nickel-potassium alloy plating layer 3 is preferably 10 nm or more and 100 nm or less.

The film thickness of the silver-nickel-potassium alloy plating layer 3 is set to 0.5 µm or more and 20.0 µm or less. If the film thickness of the silver-nickel-potassium alloy plating layer 3 is less than 0.5 µm, the heat resistance and the wear resistance cannot be improved; if it exceeds 20.0 µm, the silver-nickel-potassium alloy plating layer 3 is too thick and cracks may occur by bending works or the like. The film thickness of the silver-nickel-potassium alloy plating layer is preferably 1.0 µm or more and 10.0 µm or less.

Next, a method of manufacturing the terminal material 1 for a connector will be described. The method of manufacturing the terminal material 1 for a connector includes a pre-treatment step cleansing a plate material to be the base material 2 in which at least a surface is made of copper or copper alloy; a silver-strike plating step performing silver-strike plating treatment on the base material 2; and a step of forming the silver-nickel-potassium alloy plating layer forming the silver-nickel-potassium alloy plating layer 3 by performing silver-nickel-potassium alloy plating treatment after the silver-strike plating treatment.

### [Pre-treatment Step]

First, a plate material at least a surface is made of copper or copper alloy is prepared as the base material 2, and the pre-treatment is performed to cleanse the surface of the plate material by degreasing, pickling and the like.

### [Silver-strike Plating Step]

After performing activation treatment on the base material 2 using 5 to 10% by mass of potassium cyanide solution, the silver-strike plating treatment is performed on the base material 2 for a short time to form a thin silver-plating layer.

The composition of a silver-plating bath for performing the silver-strike plating treatment is not specifically limited; for example, it is composed of silver cyanide (AgCN) 1 g/L to 5 g/L and potassium cyanide (KCN) 80 g/L to 120 g/L. In this silver-plating bath, using stainless steel (SUS316) as an anode and performing the silver-strike plating treatment for about 30 seconds under condition of bath temperature 25°C and electric current 1.5 A/dm², the silver-strike plating layer is formed. By forming the silver-nickel-potassium alloy plating layer 3, it is difficult to identify the silver-strike plating layer as a layer.

### [Step of Forming Silver-nickel-potassium Alloy Plating Layer]

After the silver-strike plating treatment, the silver-nickel-potassium alloy plating is performed to form the silver-nickel-potassium alloy plating layer 3. For a plating bath for forming the silver-nickel-potassium alloy plating layer 3, for example, a cyanogen bath can be used that has a composition composed of silver cyanide (AgCN) 30 g/L to 50 g/L, potassium cyanide (KCN) 120 g/L to 200 g/L, potassium carbonate (K₂CO₃) 15 g/L to 30 g/L, potassium tetracyanonickelate (II) monohydrate (K₂[Ni(CN)₄]·H₂O) 120 g/L to 200 g/L, and an additive agent to deposit the silver-nickel-potassium alloy plating layer 3 smoothly. The additive agent may be a general additive agent if it does not contain antimony.

Using a pure silver plate as an anode in this plating bath and performing the silver-nickel-potassium alloy plating in a condition of bath temperature 25°C and current density 4 A/dm² to 12 A/dm², the silver-nickel-potassium alloy plating layer 3 is formed with a film thickness of 0.5 µm or more and 20.0 µm or less.

If the current density of the silver-nickel-potassium alloy plating treatment is less than 4 A/dm², it is suppressed to maki eutectoid of nickel and potassium; if the current density exceeds 12 A/dm², appearance of the silver-nickel-potassium alloy plating layer 3 is deteriorated. The plating bath for forming the silver-nickel-potassium ally plating layer 3 is not limited to the above-described composition: if it is potassium cyanide bath and antimony is not contained in the additive agent, the composition is not specifically limited.

As described above, the terminal material 1 for a connector having the silver-nickel-potassium alloy plating layer 3 on the surface of the base material 2 is formed. Then, by performing press working and the like on the terminal material 1 for a connector, a terminal for a connector having the silver-nickel-potassium alloy plating layer 3 on the surface is formed.

Since in the terminal material 1 for a connector of the present embodiment the silver-nickel-potassium alloy plating layer 3 which is formed on the outermost surface of the base material 2 has the eutectoids of nickel and potassium, the particles in the silver-nickel-potassium alloy plating layer 3 can be minute and it is possible to suppress the increase of the contact resistance even in the high temperature environment comparing with the hard silver-antimony plating layer. Moreover, it is possible to increase the hardness of the outermost surface of the terminal material 1 and improve the wear resistance.

### [Second Embodiment]

FIG. 2 shows a second embodiment of the present invention. In a terminal material 11 for a connector in the present embodiment, a nickel-plating layer 4 made of nickel or nickel alloy is formed between the base material 2 and the silver-nickel-potassium alloy plating layer 3.

The nickel-plating layer 4 is formed by performing nickel-plating treatment made of nickel or nickel alloy on the base material 2 and covers the base material 2. The nickel-plating layer 4 has a function of suppressing the diffusion of copper from the base material 2 to the silver-nickel-potassium alloy plating layer 3 covering the nickel-plating layer 4.

A thickness (film thickness of the nickel-plating layer 4 is preferably 0.2 µm or more and 5.0 µm or less; more preferably, 0.3 µm or more and 2.0 µm or less. If the thickness of the nickel-plating layer 4 is less than 0.2 µm, there is a risk that copper is diffused from the base material 2 into the silver-nickel-potassium alloy plating layer 3 the high temperature environment. If copper which is diffused into the silver-nickel-potassium alloy plating layer 3 is diffused so far to the surface of the plating film, copper is oxidized to increase the contact resistance value of the silver-nickel-potassium alloy plating layer 3, and there is a possibility that the heat resistant decreases.

On the other, if the thickness of the nickel-plating layer exceeds 5.0 µm, there is a possibility that cracks occur by bending work. Then nickel-plating layer 4 is not specifically limited in the composition if it is made of nickel or nickel alloy.

When the terminal material 11 for a connector is manufactured, a pre-treatment step, a nickel-plating layer forming step, a silver-strike plating step, and a silver-nickel-potassium alloy plating layer forming step are carried out in order. The pre-treatment step, the silver-strike plating step, and the silver-nickel-potassium alloy plating step are the same as in the first embodiment and the explanation are omitted.

### [Nickel-plating Layer Forming Step]

Nickel-plating treatment is performed on a surface of the base material 2 on which the pre-treatment was subjected to form the nickel-plating layer 4 on the base material 2. Specifically, for example, using a nickel-plating bath containing nickel sulfamate 350 g/L, nickel chloride hexahydrate 10g/L, and boric acid 30 g/L, under condition of bath temperature 45°C and current density 5 A/dm², the nickel-plating treatment is carried out. In addition, the nickel-plating treatment forming the nickel-plating layer 4 is not specifically limited if a dense nickel-based film is obtained, and may be an electroplating treatment using a known Watt bath.

The terminal material 11 for a connector is covered with the nickel-plating layer 4 at the surface of the base material 2, the diffusion of copper from the base material 2 into the silver-nickel-potassium alloy plating layer 3 is prevented and it is possible to maintain the wear resistance and the heat resistance of the silver-nickel-potassium alloy plating layer 3 for a long time.

### [Third Embodiment]

FIG. 3 shows a third embodiment of the present invention. In a terminal material 12 for a connector, a silver-plating layer 5 is further formed on the silver-nickel-potassium alloy plating layer 3. FIG. 3 shows an example in which the nickel-plating layer 4 is formed for preventing the copper diffusion from the base material 2 is formed between the base material 2 and the silver-nickel-potassium alloy plating layer 3. However, in the present invention, the nickel-plating layer 4 is not necessary.

The silver-plating layer 5 is not easily oxidized at the surface even in the high temperature environment, and the increase of the contact resistance can be suppressed. The silver-plating layer 5 is made of pure silver with purity of 99.0% by mass or more excepting C, H, S, O and N which are gas components, preferably purity of 99.9% by mass. "Excepting C, H, S, O and N which are the gas components" means to exclude elements of the gas components. The reason why the purity is 99.0% or more by mass is that if the purity of silver in the silver-plating layer 5 is less than 99.0% by mass or less, a large amount of impurities are contained and the contact resistance tends to be high.

### [Silver-plating Layer Forming Step]

Composition of a silver-plating bath for forming the silver-plating layer 5 is not specifically limited; for example, it is made of silver cyanide (AgCN) 40 g/L to 50 g/L, potassium cyanide (KCN) 110 g/L to 130 g/L, potassium carbonate (K₂CO₃) 10 g/L to 20 g/L, and an additive. In this silver-plating bath, using a pure-silver plate as an anode and performing the plating treatment in condition that the bath temperature is normal temperature (25°C to 30°C) and current density is 2 A/dm² to 4 A/dm+, the silver-plating layer 5 is formed.

The silver-plating layer 5 is relatively soft but held by the hard silver-nickel-potassium alloy plating layer 3 underneath, so that the lubricant effect is excellent and the wear resistance is improved. A film thickness of the silver-plating layer 5 is preferably 0.1 µm or more and 5.0 µm or less. If the film thickness of the silver-plating layer 5 is less than 0.1 µm, it is too thin and easily lost by wearing in a short time.
If the film thickness exceeds 5.0 µm, the soft silver-plating layer 5 is thick and there is a risk that the friction coefficient increases. The film thickness of the silver-plating layer 5 is preferably 0.25 µm or more and 3.0 µm or less.

Other details are not limited to the construction of the embodiments, and various modifications may be made without departing from the scope of the present invention.

For example, it is not limited to the above-described embodiment in which the silver-nickel-potassium alloy plating layer 3 is formed on the whole upper surface of the base material 2, for example, the silver-nickel-potassium alloy plating layer 3 may be formed on a part of the upper surface of the base material 2. In a case in which the nickel-plating layer 4 is formed, the nickel-plating layer 4 is formed on a part of the upper surface of the base material 2 and the silver-nickel-potassium alloy plating layer 3 may be formed on the nickel-plating layer 4; or on a part of the nickel-plating layer formed on the whole area of the upper surface of the base material 2, the silver-nickel-potassium alloy plating layer 3 may be formed. It is enough that a surface of a part to be the contact when it is formed into a terminal is silver-nickel-potassium alloy plating layer 3 at least.

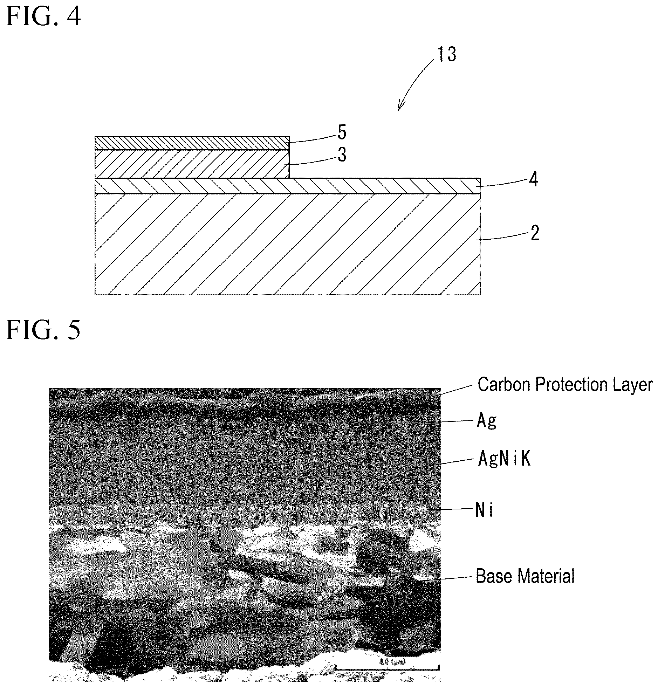

In a case in which the silver-plating layer 5 is formed, in any of these aspects, it is sufficient to be formed on a whole or a part of the upper surface of the silver-nickel-potassium alloy plating layer 3; it is sufficient to be formed at a part to be the contact of the connector. In a terminal material 13 for a connector of a fourth embodiment shown in FIG. 4, the nickel-plating layer 4 is formed on a whole surface of the base material 2, the silver-nickel-potassium alloy plating layer 3 is formed on a part of the nickel-plating layer 4, and the silver-plating layer 5 is formed on the silver-nickel-potassium alloy plating layer 3.

### [Examples]

A base material made of copper alloy plate having a thickness 0.25 mm was prepared, and subjected to the pre-treatment step cleansing the surface by performing degreasing, pickling and the like on the base material (pre-treatment step), then the nickel-plating treatment was performed on the surface of the base material to form the nickel-plating layer (nickel-plating layer forming step).

Then, after performing an activation treatment on the nickel-plating surface using 10% by mass of potassium cyanide aqueous, the silver-strike plating treatment was performed on the base material which was covered with the nickel-plating layer (silver-strike plating step).

The silver-nickel-potassium alloy plating treatment was performed thereon (silver-nickel-potassium alloy plating layer forming step), and the silver-plating treatment was performed thereon (silver-plating layer forming step) to produce samples shown in Table 1 and Table 2. In addition, in Table 1 and Table 2, Nickel-plating layer was described as an Ni layer; the silver-nickel-potassium alloy plating layer was described as an AgNiK layer; and the silver-plating layer was described as an Ag layer. The nickel content (described as Ni content) in the silver-nickel-potassium alloy plating layer and the potassium content (described as K content) were adjusted by the amount of potassium tetracyanonickelate (II) monohydrate (described as "Ni-CN" in Table 1) in the plating treatment and the current density in the plating treatment.

In addition, Comparative Example 14 in which a silver-plating layer was formed on the nickel-plating layer without forming the silver-nickel-potassium alloy plating layer and Comparative Example 15 in which a silver-antimony alloy plating layer was formed on the nickel-plating layer were produced.

Conditions for plating were as follows.

### <Nickel Plating Condition>

Composition of Plating Bath
   Nickel sulfamate: 350 g/L
   Nickel chloride hexahydrate: 10 g/L
   Boric acid: 30 g/L
Bath Temperature: 45°C
Current Density: 5 A/dm²
pH: 4

### <Silver-strike Plating Condition>

Composition of Plating Bath
   Silver cyanide: 2 g/L
   Potassium cyanide: 100 g/L
Anode: SUS316
Bath Temperature: 25°C
Current Density: 1.5 A/dm²

### <Silver-nickel-potassium Alloy Plating Condition>

Composition of Plating Bath
   Silver cyanide: 45 g/L
   Potassium cyanide: 180 g/L
   Potassium carbonate: 20 g/L
   Potassium tetracyanonickelate (II) monohydrate: 120 g/L to 200 g/L
   Additive: 5 ml/L
Anode: Pure silver plate
Bath Temperature: 25°C
Current Density: 4 A/dm² to 14 A/dm²

### <Silver-plating Condition>

Composition of Plating Bath
   Silver cyanide: 45 g/L
   Potassium cyanide: 115 g/L
   Potassium carbonate: 15 g/L
      Brightener: SILVER GLO 3K (made by DDP Specialty Products Limited) 15 ml/L
      (same) SILVER GLO TY: 5 ml/L
Bath Temperature: 25°C
Current Density: 4 A/dm²
   Anode: Pure silver plate

For each sample, the film thickness of the silver-nickel-potassium alloy plating layer, the nickel content and the potassium content in the silver-nickel-potassium alloy plating layer, an average crystal grain size of the silver-nickel-potassium alloy plating layer, and the film thicknesses of the silver-plating layer and the nickel-plating layer were measured.

### [Measurement of Film Thickness of Plating Layer]

The film thicknesses of the silver-nickel-potassium alloy plating layer, the silver-plating layer and the nickel-plating layer were measured as follow. Cross-section processing was performed on each sample using a focused ion beam device (model number: SMI3050TB): FIB made by Seiko Instruments Inc., the formed cross section was observed with a Scanning Ion Microscope (SIM), the film thickness at any three locations in the cross-sectional SIM image at a tilt angle of 60° was measured, and the average was determined and then converted to the actual length.

### [Measurement of Average Crystal Grain Size of Silver-nickel-potassium alloy plating layer]

The plated material with the silver-nickel-potassium alloy plating layer was processed into a cross-sectional sample having a thickness of about 50 nm using FIB. The silver-nickel-potassium alloy plating layer on the processed surface of the cross-sectional sample was measured twice for crystal orientation in the measurement range of 200 nm × 400 nm and at a measurement step 2 nm, while radiating electron ray at acceleration voltage 200 kV, using a transmission electron microscope (TEM) including an EBSD (electron back scatter diffraction) device. Subsequently, data of the crystal orientation was analyzed using analysis software, and the crystal grain size (including twin crystals) of the silver-nickel-potassium alloy plating layer was measured assuming that a grain boundary was between the measurement points at which the orientation difference between adjacent measurement points was 5° or more.

The device and the analysis software used for the measurement were as follows.
EBSD device: OIM Data Collection made by EDAX/TSL Co.
Analysis software: OIM Data Analysis ver. 5.2 made by EDAX/TSL Co.

In addition, regarding the sample (Comparative Example 10) in which the contents of nickel and potassium in the silver-nickel-potassium alloy plating layer was less than the lower limit, the measurement was performed by the following method since the crystal grain size was guessed to be large.

The cross section along a growing direction (plate thickness direction of the base material) of electrodeposition of the silver-nickel-potassium alloy plating layer was processed by an ion milling method and measured at the crystal orientation using a field emission-scanning electron microscope (FE-SEM) including an EBSD device (JSM-7001FA made by JEOL Ltd.), at an acceleration voltage 15 kV, in a measurement range of 25 µm × 3.0 µm at a measurement step 0.02 µm. Then, a boundary where the orientation difference was 5° or more between adjacent pixels was assumed as a grain boundary, and the crystal grain size (including twin crystals) of the silver-nickel-potassium alloy plating layer was measured.

The same device and the same analysis software as in the above-described were used for measurement.

Approximating the obtained crystal grain size to an area circle, the average crystal grain size was calculated by a weight average weighted by the area.

### [Measurement of Nickel Content (Ni content) and Potassium Content (K content)]

For each sample, the content (% by mass) of nickel and potassium in the silver-nickel-potassium alloy plating layer was measured by a GD-MS (glow discharge-mass spectrometry).

For measurement, Astrum (brand name) that is a GD-MS device made by Nu Instruments Ltd. was used to detect the Faraday cup and impurities of the main ingredient by an IC multiplier. Detection condition is as follows.
Glow discharge: constant current mode
Discharge current: 0.7 mA
Discharge voltage: 0.5 kV
Discharge gas: Ar (>99.9999%)
Depth direction resolution: 0.05 µm/scan

These measurement results are shown in Table 1. Since cracks occurred during an indent processing for measuring the contact resistance, Comparative Example 11 was not measured at the crystal grain size of the silver-nickel-potassium alloy plating layer, the contact resistance, and the friction coefficient. "-" was noted in Table 1 for these which were not measured.

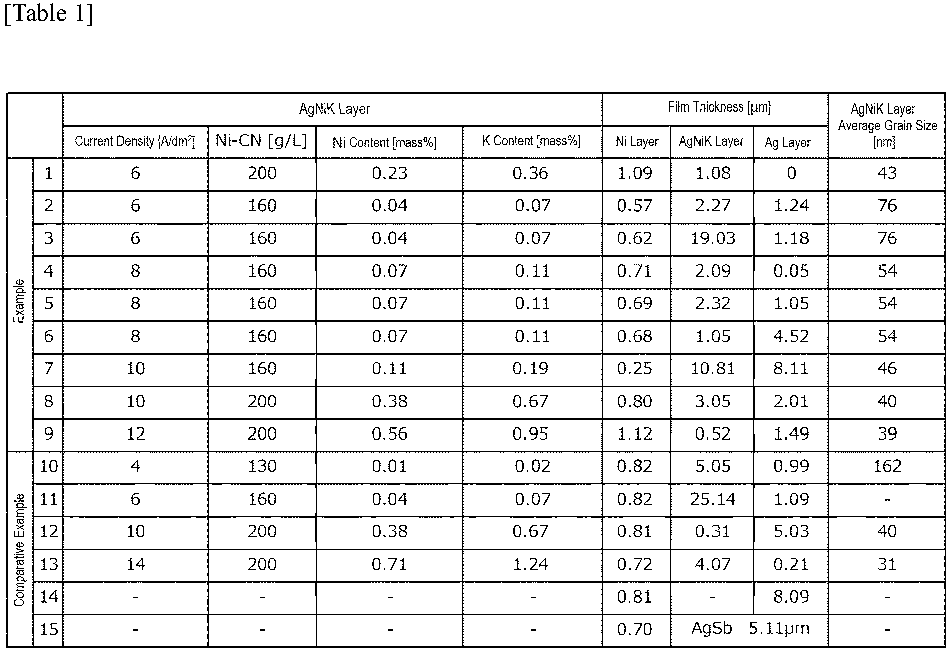

### [Measurement of Contact Resistance]

Each sample was cut out to a test piece "α" of 60 mm × 30 mm and a test piece "β" of 60 mm × 10 mm; the test piece "α" of a flat plate was used as a male terminal (male terminal test piece); and the test piece "β" subjected to indent processing forming a hemispherical convex portion with a radius of curvature 5 mm in the flat plate was used as a female terminal (female terminal test piece).

For these test pieces, before heating and after heating at 180°C for 500 hours, the contact resistance (mS2) was measured respectively. For the measurement, using a friction abrasion testing device (UMT-Tribolab) made by Bruker AXS Company, the contact resistance value of the male terminal test piece was measured by the four-terminal test method when the convex surface of the convex portion of the female terminal test piece was brought into contact with the male terminal test piece that was arranged horizontally with applying 10 N of load.

### [Measurement of Friction Coefficient, Wear Resistance Test (Sliding Test)]

The friction coefficient was measured as follows to evaluate the wear resistance.

The test pieces "α" and "β" having the same shape as the test pieces used for measurement of the contact resistance were prepared. The convex surface of the convex portion of the test piece "β" and the test piece "α" were pushed to each other and moved for a distance of 10 mm in a condition of sliding speed 1.33 mm/sec, to measure the change of the friction coefficient. An average value of friction coefficient obtained between 5 mm to 10 mm of the movement distance was the friction coefficient.

In addition, the friction coefficient depends on the plating film thickness. Accordingly, if the total film thickness of the silver-plating layer and the silver-nickel-potassium alloy plating layer is large, the friction coefficient under the same condition as the sample having the thin film thickness cannot be compared; therefore, for the samples in which the total of the film thickness of the silver-plating layer and the silver-nickel-potassium alloy plating layer exceeds 8.0 µm, the sliding test was performed instead of the measurement of the friction coefficient.

In this sliding test, in the friction abrasion testing device (UMT-Tribolab) made by Bruker AXS Company, in a state in which the convex surface of the convex portion of the test piece "β" was brought into contact with the test piece "α" that is arranged horizontally and a load 5 N was applied, the male terminal test piece was repeatedly slid 50 times horizontally with a moving distance 5 mm. The wear resistance was judged whether the nickel-plating layer that is an undercoating of the test piece was exposed or not after the sliding test. At this time, ones in which the nickel-plating layer that is the undercoating was not exposed after the sliding test were good "A", and ones in which the nickel-plating layer that is the undercoating was exposed were not good "B".

These results are shown in FIG. 2.

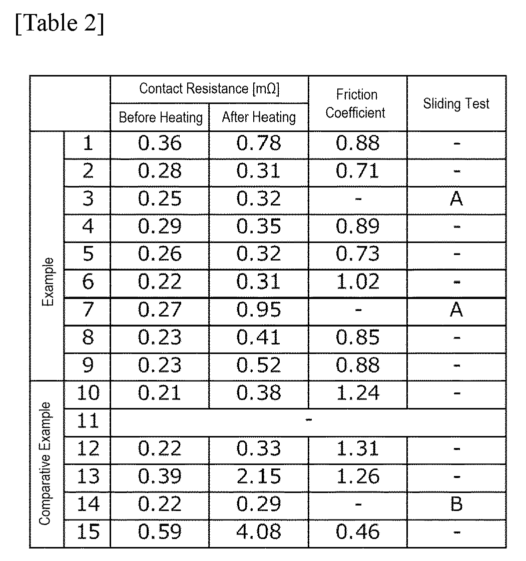

As known from Table 1 and Table 2, in Examples 1 to 9 in which the film thickness of the silver-nickel-potassium alloy plating layer was 0.5 µm or more and 20.0 µm or less, the nickel content was 0.02% by mass or more and 0.60% by mass or less, and the potassium content was 0.03% by mass or more and 1.00% by mass or less, the contact resistance was low and stable before and after heating, and the friction coefficient was also a low value.

However, although the silver-nickel-potassium alloy plating layer of Example 1 was thinner than in Example 2, the friction coefficient showed high value. The reason is that there is no silver-plating layer in Example 1, different from Example 2, so that there is no lubricant effect of the silver-plating layer.

In Example 6, since the content of nickel and potassium in the silver-nickel-potassium alloy plating layer was low, the silver-nickel-potassium alloy plating layer was soft; and the friction coefficient was slightly high since the silver-plating layer was thick.

In Example 9, since the content of nickel and potassium in the silver-nickel-potassium alloy plating layer was high, the deposition was slightly rough; however, the silver-nickel-potassium alloy plating layer was harder for that, the friction coefficient was not so high.

Among them, Examples 2, 4, 5 and 8 are good since the contact resistance was 0.41 mΩ or lower even after heating, and the friction coefficient was 0.89 or lower.

FIG. 5 shows a cross-sectional SIM image of Example 5: it shows that the silver-nickel-potassium alloy plating layer (described as AgNiK) and the silver-plating layer (described as Ag) are formed on the nickel-plating layer (described as Ni) on the surface of the base material. It is shown that the crystal grain size in the silver-nickel-potassium alloy plating layer is small.

Comparing with the above Examples, in Comparative Example 10, since the content of nickel and potassium in the silver-nickel-potassium alloy plating layer was low, the average crystal grain size was large in the silver-nickel-potassium alloy plating layer; as a result, the friction coefficient was high. In Comparative Example 12, since the silver-nickel-potassium alloy plating layer was thin and the soft silver-plating layer was thick, the friction coefficient was higher comparing with Example 8 having the film thickness near to the total of both film thicknesses. In Comparative Example 13, since the content of nickel and potassium in the silver-nickel-potassium alloy plating layer was large, the deposition thereof was rough and the friction coefficient was high. Moreover, the contact resistance after heating was high and the heat resistance was poor. In Comparative Example 14, since the silver-nickel-potassium alloy plating layer was not formed and only the silver-plating layer was formed, the wear resistance was poor and the nickel-plating layer that was the undercoating was exposed after the sliding test. In Example 7 having the film thickness of the silver-plating layer near to that of Comparative Example 14, the nickel-plating layer that is the undercoating is not exposed after the sliding test. Comparative Example 15 is a test piece in which the silver-antimony alloy plating layer was formed rather than the silver-nickel-potassium alloy plating layer; although the friction coefficient is low, the heat resistance is poor.

### Industrial Applicability

According to the present invention, it is possible to provide a terminal material for a connector in which the wear resistance and the heat resistance are improved.

### Reference Signs List

- 1, 11, 12, 13: Terminal material for connector
- 2: Base material
- 3: Silver-nickel-potassium alloy plating layer
- 4: Nickel-plating layer
- 5: Silver-plating layer

## Claims

1. A terminal material for a connector comprising
a base material at least a surface is made of copper or copper alloy, and
a silver-nickel-potassium alloy plating layer formed on at least a part of the base material, wherein
the silver-nickel-potassium alloy plating layer has a film thickness of 0.5 µm or more and 20.0 µm or less, a nickel content of 0.02% by mass or more and 0.60% by mass or less, and a potassium content of 0.03% by mass or more and 1.00% by mass or less.

2. The terminal material for a connector according to claim 1, wherein an average crystal grain size of the silver-nickel-potassium alloy plating layer is 10 nm or more and 150 nm or less.

3. The terminal material for a connector according to claim 1 or 2, further comprising a silver-plating layer having a purity of silver 99.0% by mass or more excepting C, H, S, O, and N which are gas components with a film thickness of 0.1 µm or more and 5.0 µm or less on at least a part of the silver-nickel-potassium alloy plating layer.

4. The terminal material for a connector according to any one of claims 1 to 3, wherein a nickel-plating layer made of nickel or nickel alloy with a film thickness of 0.2 µm or more and 5.0 µm or less is formed between the base material and the silver-nickel-potassium alloy plating layer.
